# EUROPÄISCHE PATENTANMELDUNG

(11) **EP 3 009 904 A1**
(43) Veröffentlichungstag der Anmeldung: **20.04.2016**
(21) Anmeldenummer: 14003501.5
(22) Anmeldetag: 13.10.2014
(51) Int. Cl.: G05B 19/418, G06Q 10/08, G06Q 10/06

(54) **Verfahren und Anlage zur Herstellung von Gegenständen sowie Telekommunikationsverfahren und Computerprogramm hierfür**

(71) Anmelder: Eisenmann SE, 71032 Böblingen (DE)
(72) Erfinder: von Krauland, Matthias, CH-3780 Gstaad (CH)
(74) Vertreter: Heinrich, Hanjo

(57) **Zusammenfassung**

Die Erfindung betrifft ein Verfahren zur Herstellung von Gegenständen (26), insbesondere von Kraftfahrzeugen (28), in einem industriellen Herstellungsprozess, bei dem eine Vielzahl von Arbeitsabläufen von einem Prozesssteuerungssystem (10) koordiniert wird, wobei das Prozesssteuerungssystem (10) über einen Kommunikationsweg (30) mit wenigstens einer elektronischen Kommunikationseinrichtung (32) Daten austauscht, die eigenständig und unabhängig von dem Prozesssteuerungssystem (10) betrieben wird, wobei ein Benutzer Daten an der elektronischen Kommunikationseinrichtung (32) eingeben kann, welche dann als Änderungs-Datensatz an das Prozesssteuerungssystem (10) übermittelt werden, und das Prozesssteuerungssystem (10) den Herstellungsprozess auf der Basis der erhaltenen Änderungsdaten neu koordiniert. Außerdem sind eine Anlage zur Herstellung von Gegenständen (26), insbesondere von Kraftfahrzeugen (28), ein Telekommunikationsverfahren und ein Computerprogramm angegeben.

## Beschreibung

Die Erfindung betrifft ein Verfahren zur Herstellung von Gegenständen, insbesondere von Kraftfahrzeugen, in einem industriellen Herstellungsprozess, bei dem eine Vielzahl von Arbeitsabläufen von einem Prozesssteuerungssystem koordiniert wird.

Außerdem betrifft die Erfindung eine Anlage zur Herstellung von Gegenständen, insbesondere von Kraftfahrzeugen, mit einem Prozesssteuerungssystem für einen industriellen Herstellungsprozess für die Gegenstände.

Ferner betrifft die Erfindung ein Telekommunikationsverfahren für, insbesondere mobile, elektronische Kommunikationseinrichtungen, welche über ein kabelgebundenes oder drahtloses Netzwerk mit einem Arbeitsserver verbunden sind, sowie ein Computerprogramm.

Nachfolgend wird die Erfindung lediglich exemplarisch am Beispiel der Automobilindustrie und der Herstellung von Kraftfahrzeugen erläutert; das hierzu Gesagte gilt jedoch sinngemäß entsprechend für die Herstellung beliebiger Gegenstände, für deren Herstellung eine Vielzahl von Arbeitsabläufen von einen Prozesssteuerungssystem koordiniert wird.

Der industrielle Herstellungsprozess für ein Kraftfahrzeug ist äußerst komplex und umfasst sowohl logistische und planerische Arbeitsabläufe im Rahmen einer Produktionsplanung, bei der die erforderlichen Ressourcen ermittelt, beschafft und verteilt werden, als auch die technischen Arbeitsabläufe im Rahmen einer Produktionsdurchführung, bei der ein Kraftfahrzeug konkret gefertigt wird.

Bei der Produktionsdurchführung wird eine Vielzahl von Produktionsstationen durchlaufen. Um die Komplexizität des Herstellungsprozesses eines Kraftfahrzeuges zu verdeutlichen, werden nachfolgend einige wichtige Stationen kurz erläutert. Zu solchen wichtigen Stationen zählen unter anderem:
Die Gießerei, in welcher Gussteile, insbesondere zum Beispiel der Motorblock, für das Kraftfahrzeug hergestellt werden.

Das Presswerk, in welchem die erforderlichen Blechteile für die Fahrzeugkarosserie gefertigt werden.

Der Rohbau, bei welchem die Rohkarosserie aus den Blechteilen gebildet wird. Allein der Rohbau ist seinerseits in eine Vielzahl von Unterstationen unterteilt, in denen einzelne Teilabschnitte der Karosserie, wie die Bodengruppe, die Türen oder dergleichen, gefertigt werden, um dann zur Fahrzeugkarosserie zusammengefügt zu werden.

Die Lackieranlage, in welcher die Rohkarosserie in mehreren aufwendigen Schritten mit einem Korrosionsschutz versehen und lackiert wird.

Die Fahrwerksfertigung, bei der fahrwerkspezifische Baugruppen wie Achse, Gelenkwellen, Stoßdämpfer, Bremsen und dergleichen produziert werden.

Die Innenausstattung, bei welcher alle Komponenten für den Innenbereich des Kraftfahrzeugs, wie beispielsweise Verkleidungen, der Fahrzeughimmel, Matten, aber auch Zierelemente und Bedieneinheiten, gefertigt werden.

Die Außenausstattung, bei welcher beispielsweise Stoßfänger, Außenspiegel, Zierleisten und dergleichen produziert werden.

Der Getriebebau, wo nach Vorgabe das fahrzeugspezifische Getriebe gefertigt wird.

Der Motorbau, wo der Motor für ein bestimmtes Kraftfahrzeug hergestellt wird.

Die Fahrzeugmontage, bei der die einzelnen Komponenten und Baugruppen schließlich zum fertigen Kraftfahrzeug zusammengebaut werden, welches hiernach noch eine Station zur Qualitätskontrolle durchläuft.

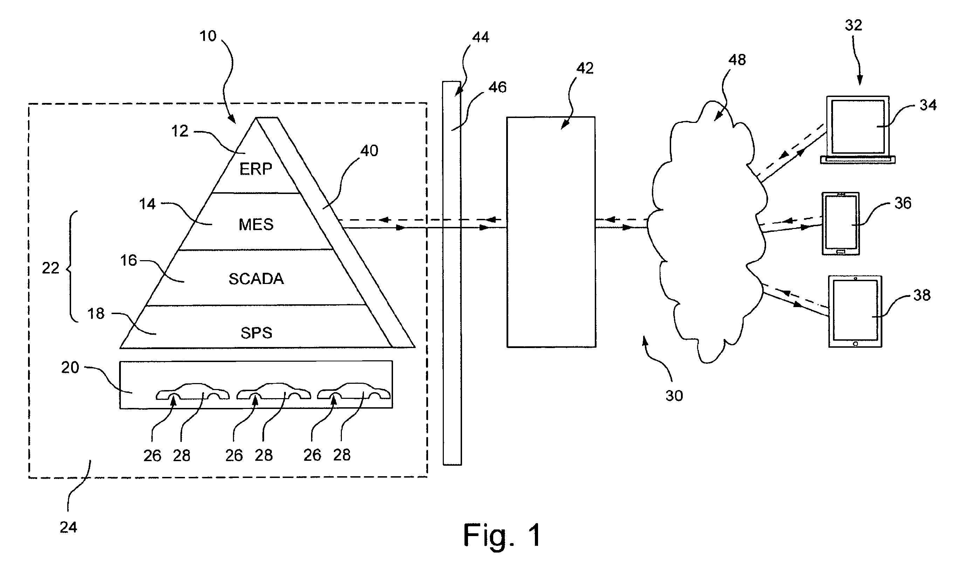

Mit Hilfe eines eingangs genannten Prozesssteuerungssystems wird der komplexe Herstellungsprozess eines Kraftfahrzeuges in mehreren Systemebenen koordiniert und überwacht. Eine bekannte Variante eines solchen Prozesssteuerungssystems ist beispielsweise in Figur 1 in Form eines Prozesssteuerungssystems 10 veranschaulicht. Bekannte Prozesssteuerungssysteme bilden ein internes und abgeschlossenes System ohne Kommunikationsverbindung nach außen.

Dieses umfasst als Systemebenen eine ERP-Ebene 12, eine MES-Ebene 14, eine SCADA-Ebene 16 und eine SPS-Ebene 18. Außerdem ist eine Fertigungs- und Produktionsebene 20 veranschaulicht, welche die oben angesprochene Prozessdurchführung repräsentiert und von dem Prozesssteuerungssystem 10 koordiniert wird und gegebenenfalls Teil des Prozesssteuerungssystems 10 ist.

Die ERP-Ebene 12 bildet die Unternehmensebene, deren Aufgabe darin besteht, im Rahmen des so genannten Enterprise-Resource-Planning die Beschaffung und Verteilung von Ressourcen zu planen und zu koordinieren, die für eine einwandfreie Abwicklung der bestehenden Auftragslage erforderlich sind.

Die MES-Ebene 14 bildet als Betriebsleitebene das so genannte Manufacturing-Execution-System. Diese Betriebsleitebene kommuniziert unter anderem unmittelbar mit der Produktionsebene 20 und erhält von dort stetige Rückmeldung über den laufenden Prozess. Die MES-Ebene 14 verwertet und koordiniert dabei auch den vorhandenen Lagerbestand und kommuniziert mit Logistikzentren und/oder Lieferanten.

Der Vollständigkeit halber sind in Figur 1 noch die SCADA-Ebene 16 als Prozessleitebene und die SPS-Ebene 18 als Steuerungsebene gezeigt. SCADA steht für Supervisory Control and Data Acquisition; die SCADA-Ebene 16 bildet ein computergestütztes System zur Überwachung und Steuerung der technischen Prozesse, die beim Herstellungsprozess durchgeführt werden. Die SPS-Ebene 18 steht für eine speicherprogrammierbare Steuerung, durch welche Maschinen oder Anlagen konkret gesteuert werden.

Die MES-Ebene 14, die SCADA-Ebene 16 und die SPS-Ebene 18 bilden gemeinsam eine Prozesssteuerung 22 für die Fertigungs- und Produktionsebene 20.

Die einzelnen Systemebenen kommunizieren unter- und miteinander, so dass ein steter Austausch und Abgleich von Informationen über den Planungsstatus für eine Produktionslinie und ein bestimmtes Kraftfahrzeug und den tatsächlichen Produktionsstatus der Produktionslinie und des bestimmten Kraftfahrzeugs erfolgen kann.

Auf Grund der heutzutage umfassenden Ausstattungsvarianten bei Kraftfahrzeugen hat es sich etabliert, Kraftfahrzeuge nicht mehr im Sinne einer so genannten Lagerfertigung im Voraus zu fertigen und auf Lager vorzuhalten, sondern einzelne Kraftfahrzeuge erst nach Eingang eines Kundenauftrags nach Vorgabe dieses Auftrags zu fertigen.

Bei den Kunden von Kraftfahrzeugherstellern ist der Wunsch nach einer individuellen Ausstattung und Konfiguration des Kraftfahrzeugs stetig gestiegen. Bevor ein Kunde sich für den Kauf eines Kraftfahrzeugs entscheidet, definiert er eine Vielzahl von Konfigurationsparametern für das Kraftfahrzeug.

Die Konfigurationsparameter gehen von der Motorisierung mit Wahl der Motorstärke und Wahl des Antriebs, d.h. Benzin-, Diesel-, Elektro- oder Hybridantrieb, über die Art der Bereifung, die Farbe, die Ausführung der Polster usw., wie es an und für sich bekannt ist. Die Automobilhersteller unterstützen den Kunden bei seiner Entscheidung für oder gegen bestimmte Ausstattungsmerkmale des Kraftfahrzeugs mit Konfigurations-Computerprogrammen, so genannten Konfiguratoren, mit deren Hilfe der Kunde verschiedene Ausstattungsvarianten einstellen und miteinander vergleichen kann. Der Kunde erhält dabei auch stets eine Preisinformation über die Kosten, die mit einer bestimmten Kombination von Ausstattungsmerkmalen verknüpft sind.

Wenn der Kunde sich für einen Kauf entscheidet und seine Wunschkonfiguration für ein Kraftfahrzeug gefunden hat, wird daraus ein Kundenauftrag mit einem Konfigurationsdatensatz erstellt, auf dessen Basis das Prozesssteuerungssystem 10 nun das bestellte Kraftfahrzeug in den Produktionsprozess integriert und den Herstellungsprozess für dieses bestimmte Kraftfahrzeug koordiniert und dabei die für die Logistik und Fertigung erforderlichen Schritte in die Wege leitet. Der Konfigurationsdatensatz spiegelt dabei die von dem Kunden gewählten und definierten Konfigurationsparameter wieder.

Es hat sich nun gezeigt, dass auf Grund der Vielzahl von Konfigurationsmöglichkeiten bei Kunden häufig der Wunsch aufkommt, die Konfiguration eines bestellten Kraftfahrzeugs nochmals zu ändern, auch nachdem der Auftrag an den Automobilhersteller bereits erteilt wurde. So kann zum Beispiel die für das Kraftfahrzeug ausgewählte Farbe aus persönlichen Gründen nicht mehr als passend empfunden werden, oder es wird doch eine andere Motorisierung oder eine andere Art der Polsterung gewünscht.

Eine Änderung der Konfiguration kann die Änderung, das Löschen oder das Hinzufügen von Konfigurationsparametern bedeuten. Eine Änderung eines Konfigurationsparameters liegt beispielsweise vor, wenn statt der ursprünglich ausgesuchten Lackfarbe Rot die Lackfarbe Weiß gewählt wird, oder wenn eine Aluminium-Autofelge mit anderem Design gewünscht wird, als ursprünglich ausgewählt wurde. Wenn beispielsweise eine äußere Zierleiste des Kraftfahrzeugs nicht mehr gewünscht wird, bedeutet dies ein Löschen eines Konfigurationsparameters. Entsprechend wird ein Konfigurationsparameter hinzugefügt, wenn das zugehörige Ausstattungsmerkmal bislang noch nicht ausgewählt war.

Es ist nun Aufgabe der vorliegenden Erfindung, ein Herstellungsverfahren und eine Anlage der eingangs genannten Art zu schaffen, durch welche der Herstellungsprozess für den Kunden transparenter und flexibler wird, und hierfür unterstützende Hilfsmittel wie ein eingangs genanntes Telekommunikationsverfahren und ein Computerprogramm zur Verfügung zu stellen.

Diese Aufgabe wird bei einem Herstellungsverfahren der eingangs genannten Art dadurch gelöst, dass
das Prozesssteuerungssystem über einen Kommunikationsweg mit wenigstens einer elektronischen Kommunikationseinrichtung
Daten bidirektional austauscht, die eigenständig und unabhängig von dem Prozesssteuerungssystem betrieben wird, wobei ein Benutzer Daten an der elektronischen Kommunikationseinrichtung eingeben kann, welche dann als Änderungs-Datensatz an das Prozesssteuerungssystem übermittelt werden, und das Prozesssteuerungssystem den Herstellungsprozess auf der Basis der erhaltenen Änderungsdaten neu koordiniert.

Erfindungsgemäß kommuniziert das Prozesssteuerungssystem bidirektional mit einer elektronischen Kommunikationseinrichtung. Bei dieser kann es sich um jede Art einer elektronischen Kommunikationseinrichtung handeln, beispielsweise also um einen Desktopcomputer, um ein Laptop oder ein Notebook, um einen Tablet-Computer oder um ein Smartphone und dergleichen.

Die Kommunikationseinrichtung wird eigenständig und unabhängig von dem Prozesssteuerungssystem betrieben. Dies bedeutet, dass die Kommunikationseinrichtung auch ohne eine Verbindung und ohne Zusammenhang mit dem Prozesssteuerungssystem arbeiten kann, wie es bei den genannten Beispielen für elektronische Kommunikationseinrichtungen eines Kunden der Fall ist. Das Prozessteuerungssystem an sich ist ohne diese unabhängige Kommunikationseinrichtung gebildet, umfasst jedoch seinerseits in der Regel elektronische Kommunikationsmittel für im Produktionsprozess arbeitende Personen. Diese bilden jedoch keine derartigen, hier interessierenden eigenständigen Kommunikationseinrichtungen.

Erfindungsgemäß wird dem Kunden die Möglichkeit gegeben, während des bereits eingeleiteten und des laufenden Herstellungsprozesses die bislang gewählte Konfiguration eines bestimmten Gegenstandes, insbesondere eines Kraftfahrzeugs, zu ändern und hierdurch in den laufenden Herstellungsprozess einzugreifen. Dieser wird von dem Prozesssteuerungssystem auf der Basis der erhaltenen Änderungsdaten derart geändert, dass das Ergebnis der Produktion an die zuletzt gewählte Konfiguration angepasst wird.

Der Herstellungsprozess kann beispielsweise eine Vielzahl von im laufenden Herstellungsprozess fest definierten Arbeitsabläufen und wenigstens einen Konfigurations-Arbeitsablauf umfassen, mit welchem zumindest ein Konfigurationsparameter am Gegenstand umgesetzt wird, wobei der wenigstens eine Konfigurations-Arbeitsablauf bis zum Erreichen eines dem zumindest einen Konfigurationsparameter zugeordneten PNR-Zeitpunktes abgewandelt, ersetzt, hinzugefügt oder weggelassen werden kann, wenn sich der Konfigurationsparameter vor Erreichen dieses PNR-Zeitpunktes ändert, wobei der Konfigurationsparameter vor Erreichen des PNR-Zeitpunktes einen änderbaren Wahl-Konfigurationsparameter definiert und bei Erreichen des PNR-Zeitpunktes ein unveränderbarer Fix-Konfigurationsparameter wird.

Ein bestimmter PNR-Zeitpunkt, der einem bestimmten Konfigurationsparameter zugeordnet ist, bildet einen so genannten "point-of-no-return"; ab diesem Zeitpunkt kann der Verlauf des Herstellungsprozesses bezogen auf den betrachteten Konfigurationsparameter nicht mehr geändert werden, weshalb dieser dann ein Fix-Konfigurationsparameter wird. Der jeweilige PNR-Zeitpunkt für die vorhandenen Wahl-Konfigurationsparameter kann bei Herstellungsbeginn festgelegt werden, wird jedoch vorzugsweise über den Verlauf des gesamten Herstellungsprozesses überwacht, um auch Änderungen eines PNR-Zeitpunktes für einen Konfigurationsparameter erfassen zu können.

Unter fest definierten Arbeitsabläufen sollen solche Arbeitsabläufe verstanden werden, die nicht oder nicht mehr von dem Kunden beeinflussbar sind. Demgegenüber ist ein Konfigurations-Arbeitsablauf ein Arbeitsablauf, der mit einem vom Kunden gewählten Konfigurationsparameter verknüpft ist und abhängig von diesem ausgewählt und durchgeführt werden kann. Dabei kann ein fest definierter Arbeitsablauf auch in einen Konfigurations-Arbeitsablauf integriert sein. Beispielsweise hängt die Art der zu fertigenden Fahrzeugtüre von dem Konfigurationsparameter ab, welcher die Karosserieform des Kraftfahrzeugs bestimmt. Die Fertigung dieser Fahrzeugtüre erfolgt jedoch durch einen fest definierten Arbeitsablauf. Auch der Ablauf der Lackierung mit einer gewählten Farbe durch Lackierroboter ist zum Beispiel ein fest definierter Arbeitsablauf. Die Auswahl der Farbe als Konfigurationsparameter erfolgt dabei bezogen auf einen Konfigurations-Arbeitsablauf, in den dieser fest definierte Lackierablauf integriert ist.

Abhängig von dem Produktionsstatus und dem Fortschritt des Produktionsverlaufs bilden die möglichen Konfigurationsparameter für die Konfiguration eines Kraftfahrzeugs zwei Gruppen. Die erste Gruppe definiert Wahl-Konfigurationsparameter, welche von dem Kunden noch geändert werden können, wobei vorgenommene Änderungen noch bei dem Herstellungsprozess berücksichtigt werden können. Die zweite Gruppe bilden Fix-Konfigurationsparameter, welche von dem Kunden nicht mehr geändert werden können, da der laufende Herstellungsprozess eine Änderung dieser Konfigurationsparameter nicht mehr zulässt.

Für die Gesamtkoordination durch das Prozesssteuerungssystem ist es dann von Vorteil, wenn
a) ein Produktions-Datensatzes erzeugt wird, welcher zumindest einen vorhandenen Wahl-Konfigurationsparameter widerspiegelt;
b) der Produktions-Datensatz automatisch oder auf Anforderung an die elektronische Kommunikationseinrichtung übermittelt wird;
c) der Produktions-Datensatz wiedergegeben wird und der zumindest eine Wahl-Konfigurationsparameter durch den Benutzer geändert wird;
d) der Änderungs-Datensatz Änderungen des zumindest einen Wahl-Konfigurationsparameters widerspiegelt.

Der Produktions-Datensatz umfasst die Information, dass ein Wahl-Konfigurationsparameter zur Verfügung steht, welcher noch geändert werden kann. Diese Information wird dem Benutzer angezeigt, indem sie beispielsweise visualisiert wird. Eine Änderung des Wahl-Konfigurationsparameters kann auch darin bestehen, dass dieser von dem Benutzer als Fix-Konfigurationsparameter definiert wird und im weiteren Verlauf des Herstellungsprozesses nicht mehr geändert werden kann.

Es ist besonders günstig, wenn der Produktions-Datensatz mehrere, insbesondere alle, vorhandenen Wahl-Konfigurationsparameter widerspiegelt und zumindest einer der Wahl-Konfigurationsparameter durch den Benutzer geändert wird. In diesem Fall erhält der Benutzer und Kunde eine umfassende Übersicht über diejenigen Konfigurationsparameter, die noch geändert werden können.

Vorzugsweise spiegelt der Produktions-Datensatz außerdem den Produktionsstatus und/oder vorhandene Fix-Konfigurationsparameter wider. Auf diese Weise erhält der Benutzer die unmittelbare Information, wie weit die Produktion seines Kraftfahrzeuges fortgeschritten ist und welche Ausstattungsmerkmale nun nicht mehr geändert werden können.

Wenn der Produktions-Datensatz außerdem den PNR-Zeitpunkt für einen vorhandenen Wahl-Konfigurationsparameter widerspiegelt, wird dem Benutzer vorteilhaft ein Zeitrahmen an die Hand gegeben, innerhalb welchem er die Entscheidung treffen kann, diesen Konfigurationsparameter zu ändern.

Es ist besonders günstig, wenn der Produktions-Datensatz außerdem Informationen über Wahlmöglichkeiten für einen vorhandenen Wahl-Konfigurationsparameter widerspiegelt. Die Wahlmöglichkeiten für einen bestimmten Wahl-Konfigurationsparameter können zum Beispiel im Verlauf des Herstellungsprozesses variieren, wenn benötigte Materialien oder Ressourcen durch andere Prozesse abgeschöpft werden. Beispielsweise kann ein Satz von Aluminiumrädern mit einem bestimmten Design eine Zeitlang als Sonderausstattung zur Verfügung stehen, ab einem bestimmten Zeitpunkt jedoch nicht mehr.

Vorzugsweise ist wenigstens ein Wahl-Konfigurationsparameter ein Individual-Konfigurationsparameter, über welchen der Benutzer den Gegenstand individualisieren kann.

Hierbei sind beispielsweise Individualmuster interessant, durch welche ein Kraftfahrzeug bereits beim Lackierprozess für den Endkäufer und Endnutzer individualisiert werden kann. Derartige Individualmuster können z.B. Fotos, Bilder, Texte, Muster und Strukturen oder dergleichen sein, die dem Hersteller von dem Endkäufer oder Endnutzer individuell vorgegeben werden können und über die elektronische Kommunikationseinrichtung geladen und an das Prozesssteuerungssystem übermittelt werden können.

Derartige Individualmuster können beispielsweise als Dekormuster innen auf die Fahrzeugkarosserie aufgebracht werden. Beispielsweise kommt in Betracht, ein Foto oder Bild eines Familienmitglieds des Endkäufers als Dekormuster im Innenraum der Fahrzeugkarosserie aufzudrucken. Aber auch außen kann eine Fahrzeugkarosserie entsprechend mit Individualmustern versehen werden.

Eine andere Art eines Individual-Konfigurationsparameters kann zum Beispiel durch die Möglichkeit definiert sein, die persönlichen Initialen des Kunden in das Interieur des Kraftfahrzeugs einzubringen, beispielsweise in Form einer Stickerei auf der Polsterung.

Die oben genannte Aufgabe wird bei einer Anlage der eingangs genannten Art dadurch gelöst, dass
das Prozesssteuerungssystem mit einer Schnittstelle zusammenarbeitet, mittels welcher zwischen dem Prozesssteuerungssystem und wenigstens einer elektronischen Kommunikationseinrichtung, die eigenständig und unabhängig von der Prozesssteuerungssystem betreibbar ist, Daten bidirektional austauschbar sind.

Zur eigenständig und unabhängig betreibbaren Kommunikationseinrichtung gilt das oben Gesagte. Hierdurch wird die Durchführung des oben erläuterten Herstellungsverfahrens ermöglicht. Das oben lediglich beispielhaft erläuterte Prozesssteuerungssystem 10 kann auch anders ausgebildet sein und beispielsweise lediglich Steuerungen umfassen, welche technische Abläufe steuern und koordinieren, ohne dass logistische Abläufe umfasst sind. Dies bedeutet, dass das Prozessteuerungssystem auch schon durch eine Anlagensteuerung gebildet sein, die beim Bau der Anlage installiert wird. Gegebenenfalls umfasst eine solche Anlagensteuerung die SCADA-Ebene 16 und die SPS-Ebene 18. Die ERP-Ebene 12 und die MES-Ebene 14 tragen zur Anlage bei, wenn die Anlage in das Unternehmen integriert und von der ERP-Ebene und MES-Ebene des Unternehmens umfasst und berücksichtigt wird.

Es ist dabei günstig, wenn ein mit der Schnittstelle verbundener Arbeitsserver vorgesehen ist, welcher derart eingerichtet ist, dass zwischen dem Arbeitsserver und der wenigstens einen elektronischen Kommunikationseinrichtung Daten austauschbar sind und der Arbeitsserver einen Änderungs-Datensatz für das Prozesssteuerungssystem empfangen kann. Auf diese Weise kann zwischen der elektronischen Kommunikationseinheit und dem Prozesssteuerungssystem eine Kommunikationsplattform gebildet werden, was aus Sicherheitsgründen sinnvoll ist.

Vorzugsweise ist der Arbeitsserver eigenständig und unabhängig von dem Prozesssteuerungssystem betreibbar. Auf diese Weise kann der Kommunikationsweg teilweise von dem Prozesssteuerungssystem entkoppelt werden.

Aus Sicherheitsgründen ist besonders bevorzugt, dass zwischen der Schnittstelle und dem Arbeitsserver eine Daten-Sicherheitseinrichtung, vorzugsweise eine Firewall, vorgesehen ist.

Die oben genannte Aufgabe wird bei dem Telekommunikationsverfahren dadurch gelöst, dass
a) der Arbeitsserver einen Produktions-Datensatz erhält, welcher zumindest einen vorhandenen Wahl-Konfigurationsparameter widerspiegelt, bei dem es sich um einen Konfigurationsparameter handelt, der bei der Herstellung eines Gegenstandes, insbesondere eines Kraftfahrzeugs, in einem Konfigurations-Arbeitsablauf am Gegenstand umgesetzt wird und bis zum Erreichen eines dem zumindest einen Konfigurationsparameter zugeordneten PNR-Zeitpunktes geändert werden kann;
b) der Arbeitsserver dem Produktions-Datensatz zugeordnete Kommunikationsdaten erhält, durch die ein Kommunikationspartner definiert wird, welchem der Produktions-Datensatz an eine elektronische Kommunikationseinrichtung übermittelbar ist;
c) der Arbeitsserver den Produktions-Datensatz automatisch oder auf Anforderung an den Kommunikationspartner übermittelt;
d) der Arbeitsserver einen Änderungs-Datensatz von dem Kommunikationspartner empfängt, welcher eine vorgenommene Änderung des zumindest einen Wahl-Konfigurationsparameters widerspiegelt;
e) der Arbeitsserver den Änderungs-Datensatz an ein Prozesssteuerungssystem übermittelt.

Mit Hilfe dieses Telekommunikationsverfahrens wird es ermöglicht, dass ein Benutzer über den Empfang eines Produktions-Datensatzes Informationen über den Stand der Produktion bezogen auf noch vorhandene Änderungsmöglichkeiten von Konfigurationsparametern erhält und darauf basierend Änderungswünsche an den Hersteller übermitteln kann.

Die Vorteile der nachfolgenden Merkmale entsprechen sinngemäß den Vorteilen, die oben bei der Beschreibung des Herstellungsverfahrens zu den entsprechenden Merkmalen angegeben wurden:
Es ist demnach günstig, wenn der Produktions-Datensatz mehrere, insbesondere alle, vorhandenen Wahl-Konfigurationsparameter widerspiegelt und zumindest einer der Wahl-Konfigurationsparameter durch einen Benutzer änderbar ist.

Vorteilhaft spiegelt der Produktions-Datensatz außerdem den Produktionsstatus und/oder vorhandene Fix-Konfigurationsparameter wider.

Vorzugsweise spiegelt der Produktions-Datensatz außerdem den PNR-Zeitpunkt für einen vorhandenen Wahl-Konfigurationsparameter wider.

Besonders bevorzugt ist, dass der Produktions-Datensatz außerdem Informationen über Wahlmöglichkeiten für einen vorhandenen Wahl-Konfigurationsparameter widerspiegelt.

Wenn wenigstens ein Wahl-Konfigurationsparameter ein Individual-Konfigurationsparameter ist, über welchen der Benutzer den Gegenstand individualisieren kann, trägt dies dem Wunsch der Kunden nach Eigenständigkeit besonders Rechnung.

Die oben genannte Aufgabe wird bei einem Computerprogramm dadurch gelöst, dass es derart konfiguriert ist, dass es bei seinem Ausführen auf einem Computer den Computer zur Durchführung folgender Schritte steuert:
a) Laden eines Produktions-Datensatzes von einem Kommunikationspartner, wobei der Produktions-Datensatz zumindest einen vorhandenen Wahl-Konfigurationsparameter widerspiegelt, bei dem es sich um einen Konfigurationsparameter handelt, der bei der Herstellung eines Gegenstandes, insbesondere eines Kraftfahrzeugs, in einem Konfigurations-Arbeitsablauf am Gegenstand umgesetzt wird und bis zum Erreichen eines dem zumindest einen Konfigurationsparameter zugeordneten PNR-Zeitpunktes geändert werden kann;
b) Wiedergeben von für einen Benutzer verwertbaren Informationen auf der Basis des Produktions-Datensatzes;
c) Ermöglichen, dass ein Benutzer einen oder mehrere Wahl-Konfigurationsparameter ändert;
c) Erzeugen eines Änderungs-Datensatzes, welcher Änderungen eines oder mehrerer Wahl-Konfigurationsparameter widerspiegelt;
d) Übermitteln des Änderungs-Datensatzes an den Kommunikationspartner.

Unter der Wiedergabe von verwertbaren Informationen soll eine Wiedergabe verstanden werden, die von dem Benutzer gelesen und als Informationsquelle für eine Entscheidung ausgewertet werden kann. Eine geeignete Wiedergabe kann insbesondere durch eine Visualisierung der Informationen erfolgen. Hierbei können je nach Art der Information eine Text-, eine grafische Darstellung oder auch ein Audiosignal oder eine Kombination zweier oder aller Darstellungsarten geeignet sein. Beispielsweise kann das Näherrücken eines PNR-Zeitpunkts für einen Wahl-Konfigurationsparameter in Form einer ablaufenden Uhr angezeigt werden und ab einen bestimmten Zeitpunkt durch ein Audiosignal untermalt werden. Einzelne Konfigurationsparameter können insbesondere grafisch dargestellt werden.

Es ist für den Benutzer vorteilhaft, wenn das Computerprogramm abhängig von dem Produktions-Datensatz eine oder mehrere der folgenden Angaben als verwertbare Informationen wiedergibt:
a) einen, mehrere oder alle vorhandenen Wahl-Konfigurationsparameter;
b) den Produktionsstatus des Gegenstandes;
c) einen, mehrere oder alle vorhandene Fix-Konfigurationsparameter;
d) einen, mehrere oder alle PNR-Zeitpunkte für vorhandene Wahl-Konfigurationsparameter;
e) gegebene Wahlmöglichkeiten für einen, mehrere oder alle vorhandenen Wahl-Konfigurationsparameter.

Die Informationen, die das Computerprogramm darstellen kann und im Endeffekt auch darstellt, hängen von dem Informationsgehalt des Produktions-Datensatzes ab, der geladen wird. Es können selbstverständlich nur solche Informationen wiedergegeben werden, die auch aus dem Produktions-Datensatz hergeleitet werden können. Zu vorhandenen Fix-Konfigurationsparametern kann beispielsweise auch der zugehörige und bereits zeitlich überschrittene PNR-Zeitpunkt mitgeteilt werden.

Besonders günstig ist es für den Benutzer, wenn der Computer eine mobilen Kommunikationseinrichtung und insbesondere ein Smartphone oder ein Tablet-Computer ist.

Nachstehend wird die Erfindung nun noch anhand der Zeichnungen ergänzend erläutert. In diesen zeigen:
- Figur 1: schematisch einen Aufbau einer Kommunikationsinfrastruktur zur Kommunikation zwischen einem Prozesssteuerungssystem für einen industriellen Herstellungsprozess und elektronischen Kommunikationseinrichtungen;
- Figur 2: ein Flussdiagramm, welches die wesentlichen Aspekte der Daten- und Kommunikationsverarbeitung des Prozesssteuerungssystems veranschaulicht;
- Figur 3: ein Flussdiagramm, welches die wesentlichen Aspekte der Daten- und Kommunikationsverarbeitung einer elektronischen Kommunikationseinrichtung veranschaulicht.

Zunächst wird nochmals auf Figur 1 Bezug genommen. Dort sind das bereits erläuterte Produktionssteuerungssystem 10 und die Fertigungs- und Produktionsebene 20 als Teil einer nur gestrichelt angedeuteten Anlage 24 für die Herstellung von Gegenständen 26 gezeigt, die als Kraftfahrzeuge 28 innerhalb der Fertigungs- und Produktionsebene 20 veranschaulicht sind.

Die Fertigungs- und Produktionsebene 20 steht exemplarisch für alle Arbeitsabläufe, die für die Herstellung eines Kraftfahrzeuges 28 durchgeführt werden müssen und die von dem Prozesssteuerungssystem 10 koordiniert werden.

Das Prozesssteuerungssystem 10 tauscht über einen bidirektionalen Kommunikationsweg 30 mit elektronischen Kommunikationseinrichtungen 32 Daten aus, wobei Kommunikationskanäle in Richtung auf die Kommunikationseinrichtungen 32 zu mit einer durchgezogenen Linie und zugehörigen Pfeilen und Kommunikationskanäle in Richtung auf die Prozessteuerung 10 zu mit gestrichelten Linien und zugehörigen Pfeilen veranschaulicht sind. Die Kommunikationseinrichtungen 32 werden eigenständig und unabhängig von dem Prozesssteuerungssystem 10 betrieben, wie es oben erläutert ist.

Figur 1 zeigt stark schematisch und exemplarisch für derartige Kommunikationseinrichtungen 32 einen Desktopcomputer 34, ein Smartphone 36 und einen Tablet-Computer 38, welcher nachfolgend der Einfachheit halber nur als Tablet 38 bezeichnet wird. Alle elektronischen Kommunikationseinrichtungen 32 bilden Computer mit der Fähigkeit aus, Daten und Programme zu speichern, zu verarbeiten und durchzuführen. Das Smartphone 36 und das Tablet 38 stehen beispielhaft für mobile elektronische Kommunikationseinrichtungen 32.

Der Kommunikationsweg 30 umfasst eine Schnittstelle 40, die mit dem Prozesssteuerungssystem 10 zusammenarbeitet. Die Schnittstelle 40 kommuniziert ihrerseits mit einem Arbeitsserver 42, der in üblicher Weise als Vermittlung zwischen zwei kommunizierenden elektronischen Einheiten dient. Der Arbeitsserver 42 definiert somit einen Kommunikationspartner für die elektronischen Kommunikationseinheiten 32 und für das Prozesssteuerungssystem 10. In der Praxis erfolgt die Kommunikation mit der Schnittstelle 40 in der MES-Ebene 14. Alternativ oder ergänzend kann die Kommunikation auch aus der ERP-Ebene 12 erfolgen. Grundsätzlich kann jede Ebene 12 bis 18 und auch die Fertigungs- und Produktionsebene 20 über die Schnittstelle 40 kommunizieren. Vorzugsweise soll dem Kunden jedoch keine direkte Einflussnahme auf die Produktionsebene 20 gestattet werden, sondern nur indirekt über die Konfigurationsparameter und die Kommunikation mit einer oder mehreren der Ebenen 12 bis 18. So kann durch das Prozesssteuerungssystem 10 beispielsweise noch eine abschließende Prüfung durchgeführt werden, ob dem Konfigurationswunsch tatsächlich entsprochen werden kann.
Es kann erwünscht sein, dass die Kommunikation des Kunden nicht mit dem Hersteller direkt, sondern mit einem Händler erfolgt. In diesem Fall kann bei einer nicht eigens gezeigten Abwandlung das Prozesssteuerungssystem 10 auch zunächst mit diesem Händler kommunizieren, der seinerseits Daten an den Arbeitsserver 42 und auf diesem Wege an den Kunden und dessen elektronische Kommunikationseinrichtung 32 weitergibt.

Zwischen der Schnittstelle 40 und dem Arbeitsserver 42 ist eine Daten-Sicherheitseinrichtung 44 in Form einer Firewall 46 eingerichtet, welche zumindest die Daten passieren müssen, die von dem Arbeitsserver 42 an die Schnittstelle 40 übermittelt werden.

Der Arbeitsserver 42 ist über ein Netzwerk 48 mit den elektronischen Kommunikationseinrichtungen 32 verbunden. Die Verbindung zwischen Netzwerk 48 und den elektronischen Kommunikationseinrichtungen kann kabelgebunden oder drahtlos erfolgen. Insbesondere bei mobilen Kommunikationseinrichtungen 32 wird die Verbindung in an und für sich bekannter Weise drahtlos erfolgen.

Die Kommunikation zwischen den Kommunikationspartnern erfolgt in ebenfalls an und für sich bekannter Weise unter Nutzung von gängigen Transport-Protokollen wie TCP, HTTP, HTTPS oder dergleichen. Das oben erläuterte Computerprogramm kann als solches auf einer elektronischen Kommunikationseinrichtung 32 installiert sein. Auf dem Arbeitsserver 42 kann alternativ dazu beispielsweise ein Web-Server etabliert sein, welcher als Benutzeroberfläche für den Benutzer dient, so dass in diesem Fall der Computer, auf dem das oben erläuterte Computerprogramm abläuft, der Arbeitsserver 42 ist. Der Produktions-Datensatz wird dann nicht als solcher an die elektronische Kommunikationseinrichtung 32 übermittelt, sondern die Kommunikation erfolgt vollständig browser-basiert. Der Kommunikationspartner für den Arbeitsserver 42, von dem dieser die Produktions-Datensätze erhält, ist dann die Schnittstelle 40 oder im weiteren Sinne das Prozesssteuerungssystem 10. Die Kommunikationseinrichtung 32 dient in einem solchen Fall als Anzeige- und Eingabeeinrichtung. In diesem Fall übermittelt der Arbeitsserver 42 nicht den Produktions-Datensatz an die Kommunikationseinrichtung 32, sondern nur auf diesem beruhende Informationen.

Nachfolgend wird beispielhaft davon ausgegangen, dass das Prozessteuerungssystem 10 mit dem Tablet 38 kommuniziert. Für diesen wird dem Benutzer von dem Hersteller des Kraftfahrzeugs oder einem Händler ein Computerprogramm in Form einer so genannten App zur Verfügung gestellt, mit dessen Hilfe der Benutzer mit dem Arbeitsserver 42 kommunizieren kann, welcher somit als Kommunikationsplattform dient. Unter den Begriff App sollen hier alle Arten von Computerprogrammen unabhängig von der genutzten Programmiersprache verstanden werden.

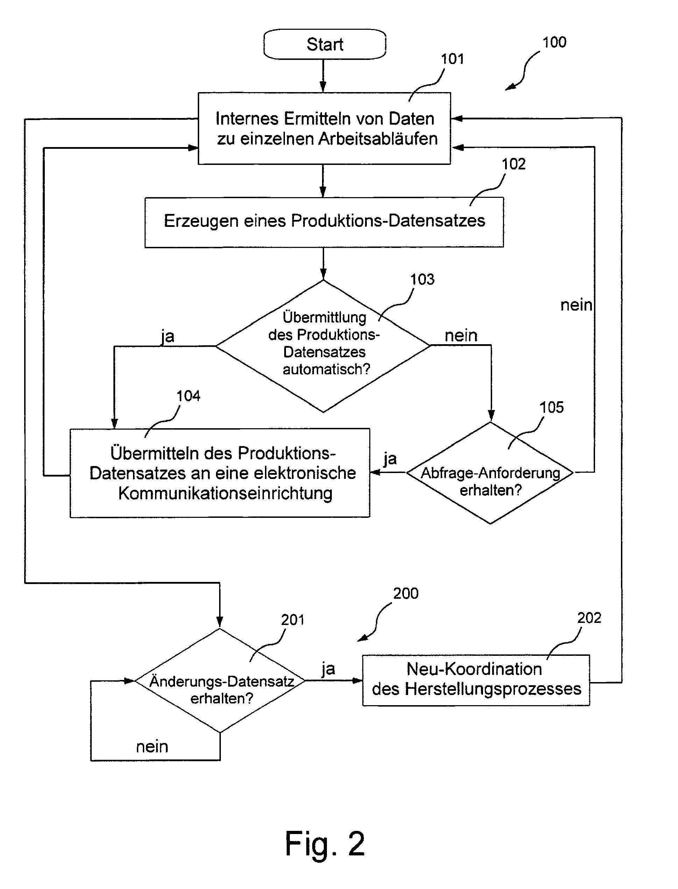

Figur 2 veranschaulicht nun an einem Ausführungsbeispiel die wesentlichen Aspekte der Kommunikation und Datenverarbeitung des Prozesssteuerungssystems 10 mit Blick auf den Datenaustausch mit einem Arbeitsserver 42. Hierbei wird vorausgesetzt, dass ein Auftrag für die Herstellung eines Kraftfahrzeuges 28 bereits erteilt wurde, zu welchem dem Hersteller ein Konfigurationsdatensatz übermittelt wurde, der die von dem Kunden gewählten Konfigurationsparameter widerspiegelt. Es ist selbstverständlich, dass zur Kommunikation und Datenverarbeitung auch noch weitere, hier nicht eigens gezeigte Abfragen und/oder Ausführungsschritte zählen.
Das Prozesssteuerungssystem 10 arbeitet einen Ablauf 100 ab, bei dem das Prozesssteuerungssystem 10, insbesondere über die MES-Ebene 14, in einem Schritt 101 intern Daten zu den einzelnen Arbeitsabläufen ermittelt und diese in einem Schritt 102 zu einem Produktions-Datensatz korreliert. Hierbei werden auch die PNR-Zeitpunkte für einzelne Konfigurationsparameter bestimmt.

Der Produktions-Datensatz enthält Informationen über den Status der Produktion und Informationen, ob es sich bei einzelnen Konfigurationsparametern noch um Wahl-Konfigurationsparameter oder bereits um Fix-Konfigurationsparameter handelt. Darüber hinaus erfasst oder berechnet das Prozesssteuerungssystem 10 den PNR-Zeitpunkt für jeden noch vorhandenen Wahl-Konfigurationsparameter. Der PNR-Zeitpunkt für einen bestimmten Konfigurationsparameter kann sich im Laufe des Herstellungsprozesses ändern. Hierfür können beispielsweise sich ändernde Lagerbestände, interne Änderungen im Prozessablauf, aber auch zuvor berücksichtigte Änderungswünsche des Kunden verantwortlich sein.

In einem Schritt 103 wird nun abgefragt, ob die Übermittlung des Produktions-Datensatzes automatisch erfolgen soll oder nicht. Dies wurde zuvor von dem Benutzer vorgegeben. Falls ja, wird der Produktions-Datensatz in einem Schritt 104 an den Arbeitsserver 42 übermittelt. Bei diesem Schritt 104 werden dem Arbeitsserver 42 darüber hinaus dem Produktions-Datensatz zugeordnete Kommunikationsdaten übermittelt, durch die ein Kommunikationspartner definiert wird, welchem der Produktions-Datensatz dann von dem Arbeitsserver 42 an eine elektronische Einrichtung 32 übermittelt werden soll. Nach Schritt 104 beginnt die Abfolge mit Schritt 101 von neuem.

Die Kommunikationsdaten können auch eine Vorgabe über die Kommunikationsart und den Kommunikationsweg geben. So kann ein Benutzer beispielsweise via E-Mail oder SMS darüber informiert werden, dass eine Änderung von Konfigurationsparametern möglich ist. Der Benutzer kann dies dann durch das entsprechende Computerprogramm durchführen. Andererseits kann die Kommunikation auch unmittelbar über das Computerprogramm erfolgen.

Falls die Übermittlung nicht automatisch erfolgen soll, wird in einem Schritt 105 ermittelt, ob eine Anforderung auf Abruf des Produktions-Datensatzes erhalten wurde. Wenn dies nicht der Fall ist, beginnt die Abfolge mit Schritt 101 von neuem. Wenn eine Anfrage auf Abruf des Produktions-Datensatzes vorliegt, wird Schritt 104 durchgeführt, nach dessen Durchführung die Abfolge mit Schritt 101 von neuem beginnt.

Parallel wird ein Ablauf 200 abgearbeitet, bei dem in einem Schritt 201 abgefragt wird, ob von dem Kommunikationspartner ein Änderungs-Datensatz eingegangen ist, mit welchem den Prozesssteuerungssystem 10 eine Änderung der Konfiguration des zu fertigenden Kraftfahrzeugs 28 angezeigt wird.

Solange kein Änderungs-Datensatz erhalten wurde, wird Schritt 201 parallel zu dem Programm 100 in einer Schleife durchgeführt. Wenn ein Änderungs-Datensatz erhalten wurde, wird der Herstellungsprozess in einem Schritt 202 neu koordiniert, wobei den gewünschten Änderungen Rechnung getragen wird.

Nach der erfolgten Neu-Koordinierung des Herstellungsprozesses wird die Programmabfolge 100 wieder mit Schritt 101 beginnend durchgeführt.

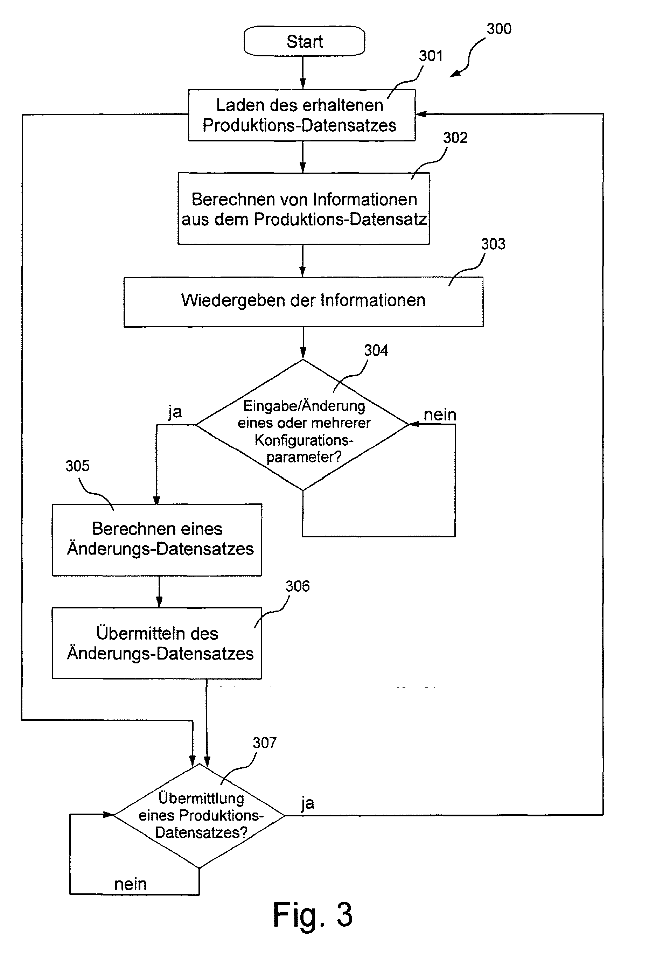

Figur 3 veranschaulicht nun an einem Ausführungsbeispiel die wesentlichen Aspekte der Kommunikation und Datenverarbeitung des Computerprogramms, das auf der Kommunikationseinrichtung 32 installiert ist. Dabei wird davon ausgegangen, dass Schritt 104 bei dem Ablauf 100 des Prozesssteuerungssystems 10 durchgeführt wurde und ein Produktions-Datensatz an die Kommunikationseinrichtung 32 übermittelt wurde. Auch hier ist es selbstverständlich, dass zur Kommunikation und Datenverarbeitung auch noch weitere, hier nicht eigens gezeigte Abfragen und/oder Ausführungsschritte zählen.

Das Computerprogramm arbeitet sodann einen Ablauf 300 ab. Bei diesem wird der erhaltene Produktions-Datensatz in einem Schritt 301 geladen. Daran schließt sich ein Schritt 302 an, in welchem auf der Basis des Produktions-Datensatzes die darin enthaltenen Informationen berechnet werden. Diese Informationen werden dann in verwertbarer Form in einem Schritt 303 wiedergegeben, wie es oben erläutert wurde.

In einem Schritt 304 wird in einer Schleife abgefragt, ob eine Eingabe und dadurch eine Änderung bei den Konfigurationsparametern erfolgt oder erfolgt ist. Falls ja, wird auf der Basis der Eingabe und der erfolgten Änderung in einem Schritt 305 ein Änderungs-Datensatz berechnet. Hierzu gibt es unterschiedliche Ansätze. Zum Beispiel kann der gesamte erhaltene Produktions-Datensatz modifiziert werden. Alternativ kann auch nur der konkret eingegebene Parameter als Information in dem Änderungs-Datensatz enthalten sein. Die Veränderung gegenüber dem ursprünglich im Produktions-Datensatz enthaltenen Parameters kann dann durch das Prozesssteuerungssystem 10 ermittelt werden, indem die Datensätze miteinander korreliert werden.

Der erzeugte Änderungs-Datensatz wird dann in einem Schritt 306 an den Kommunikationspartner übermittelt. Hiernach wird in einem Schritt 307 abgefragt, ob ein Produktions-Datensatz übermittelt wurde. Diese Abfrage erfolgt parallel zu den beschrieben Vorgängen in einer Schleife, auch wenn ein übermittelter Produktions-Datensatz bearbeitet wird. Falls ein neuer Produktions-Datensatz übermittelt wurde, wird der Ablauf 300 wieder mit Schritt 301 beginnend durchgeführt.

Insgesamt ist ein elektronisches Datenverarbeitungssystem mit wenigstens einem Computer gebildet, auf welchen ein oben erläutertes Computerprogramm installiert ist.

Es werden Datenträger zur Verfügung gestellt, auf welchem ein solches Computerprogramm abgelegt ist.

## Patentansprüche

1. Verfahren zur Herstellung von Gegenständen (26), insbesondere von Kraftfahrzeugen (28), in einem industriellen Herstellungsprozess, bei dem eine Vielzahl von Arbeitsabläufen von einem Prozesssteuerungssystem (10) koordiniert wird, wobei das Prozesssteuerungssystem (10) über einen Kommunikationsweg (30) mit wenigstens einer elektronischen Kommunikationseinrichtung (32) Daten bidirektional austauscht, die eigenständig und unabhängig von dem Prozesssteuerungssystem (10) betrieben wird, wobei ein Benutzer Daten an der elektronischen Kommunikationseinrichtung (32) eingeben kann, welche dann als Änderungs-Datensatz an das Prozesssteuerungssystem (10) übermittelt werden, und das Prozesssteuerungssystem (10) den Herstellungsprozess auf der Basis der erhaltenen Änderungsdaten neu koordiniert.

2. Verfahren nach Anspruch 1, **dadurch gekennzeichnet, dass** der Herstellungsprozess eine Vielzahl von im laufenden Herstellungsprozess fest definierten Arbeitsabläufen umfasst und wenigstens einen Konfigurations-Arbeitsablauf umfasst, mit welchem zumindest ein Konfigurationsparameter am Gegenstand (26) umgesetzt wird, wobei der wenigstens eine Konfigurations-Arbeitsablauf bis zum Erreichen eines dem zumindest einen Konfigurationsparameter zugeordneten PNR-Zeitpunktes abgewandelt, ersetzt, hinzugefügt oder weggelassen werden kann, wenn sich der Konfigurationsparameter vor Erreichen dieses PNR-Zeitpunktes ändert, wobei der Konfigurationsparameter vor Erreichen des PNR-Zeitpunktes einen änderbaren Wahl-Konfigurationsparameter definiert und bei Erreichen des PNR-Zeitpunktes ein unveränderbarer Fix-Konfigurationsparameter wird;
wobei
a) ein Produktions-Datensatzes erzeugt wird, welcher zumindest einen vorhandenen Wahl-Konfigurationsparameter widerspiegelt;
b) der Produktions-Datensatz automatisch oder auf Anforderung an die elektronische Kommunikationseinrichtung (32) übermittelt wird;
c) der Produktions-Datensatz wiedergegeben wird und der zumindest eine Wahl-Konfigurationsparameter durch den Benutzer geändert wird;
d) der Änderungs-Datensatz Änderungen des zumindest einen Wahl-Konfigurationsparameters widerspiegelt.

3. Verfahren nach Anspruch 2, **dadurch gekennzeichnet, dass** der Produktions-Datensatz mehrere, insbesondere alle, vorhandenen Wahl-Konfigurationsparameter widerspiegelt und zumindest einer der Wahl-Konfigurationsparameter durch den Benutzer geändert wird.

4. Verfahren nach Anspruch 2 oder 3, **dadurch gekennzeichnet, dass** der Produktions-Datensatz außerdem den Produktionsstatus und/oder vorhandene Fix-Konfigurationsparameter widerspiegelt.

5. Verfahren nach einem der Ansprüche 2 bis 4, **dadurch gekennzeichnet, dass** der Produktions-Datensatz außerdem den PNR-Zeitpunkt für einen vorhandenen Wahl-Konfigurationsparameter widerspiegelt.

6. Verfahren nach einem der Ansprüche 2 bis 5, **dadurch gekennzeichnet, dass** der Produktions-Datensatz außerdem Informationen über Wahlmöglichkeiten für einen vorhandenen Wahl-Konfigurationsparameter widerspiegelt.

7. Verfahren nach einem der Ansprüche 2 bis 6, **dadurch gekennzeichnet, dass** wenigstens ein Wahl-Konfigurationsparameter ein Individual-Konfigurationsparameter ist, über welchen der Benutzer den Gegenstand individualisieren kann.

8. Anlage zur Herstellung von Gegenständen (26), insbesondere von Kraftfahrzeugen (28), mit einem Prozesssteuerungssystem (10) für einen industriellen Herstellungsprozess für die Gegenstände (26), **dadurch gekennzeichnet, dass** das Prozesssteuerungssystem (10) mit einer Schnittstelle (40) zusammenarbeitet, mittels welcher zwischen dem Prozesssteuerungssystem (10) und wenigstens einer elektronischen Kommunikationseinrichtung (32), die eigenständig und unabhängig von der Prozesssystemsteuerung (10) betreibbar ist, Daten bidirektional austauschbar sind.

9. Anlage nach Anspruch 8, **dadurch gekennzeichnet, dass** ein mit der Schnittstelle (40) verbundener Arbeitsserver (42) vorgesehen ist, welcher derart eingerichtet ist, dass zwischen dem Arbeitsserver (42) und der wenigstens einen elektronischen Kommunikationseinrichtung (32) Daten austauschbar sind und der Arbeitsserver (42) einen Änderungs-Datensatz für das Prozesssteuerungssystem (10) empfangen kann.

10. Anlage nach Anspruch 9, **dadurch gekennzeichnet, dass** der Arbeitsserver (42) eigenständig und unabhängig von dem Prozesssteuerungssystem (10) betreibbar ist.

11. Anlage nach Anspruch 9 oder 10, **dadurch gekennzeichnet, dass** zwischen der Schnittstelle (40) und dem Arbeitsserver (42) eine Daten-Sicherheitseinrichtung (44), vorzugsweise eine Firewall (46), vorgesehen ist.

12. Telekommunikationsverfahren für, insbesondere mobile, elektronische Kommunikationseinrichtungen (32), welche über ein kabelgebundenes oder drahtloses Netzwerk (48) mit einem Arbeitsserver (42) verbunden sind, **dadurch gekennzeichnet, dass**
a) der Arbeitsserver (42) einen Produktions-Datensatz erhält, welcher zumindest einen vorhandenen Wahl-Konfigurationsparameter widerspiegelt, bei dem es sich um einen Konfigurationsparameter handelt, der bei der Herstellung eines Gegenstandes (26), insbesondere eines Kraftfahrzeugs (28), in einem Konfigurations-Arbeitsablauf am Gegenstand (26) umgesetzt wird und bis zum Erreichen eines dem zumindest einen Konfigurationsparameter zugeordneten PNR-Zeitpunktes geändert werden kann;
b) der Arbeitsserver (42) dem Produktions-Datensatz zugeordnete Kommunikationsdaten erhält, durch die ein Kommunikationspartner definiert wird, welchem der Produktions-Datensatz oder auf diesem beruhende Informationen an eine elektronische Kommunikationseinrichtung (32) übermittelbar ist;
c) der Arbeitsserver (42) den Produktions-Datensatz oder auf diesem beruhende Informationen automatisch oder auf Anforderung an den Kommunikationspartner übermittelt;
d) der Arbeitsserver (42) einen Änderungs-Datensatz von dem Kommunikationspartner empfängt, welcher eine vorgenommene Änderung des zumindest einen Wahl-Konfigurationsparameters widerspiegelt;
e) der Arbeitsserver (42) den Änderungs-Datensatz an ein Prozesssteuerungssystem (10) übermittelt.

13. Telekommunikationsverfahren nach Anspruch 12, **dadurch gekennzeichnet, dass** der Produktions-Datensatz mehrere, insbesondere alle, vorhandenen Wahl-Konfigurationsparameter widerspiegelt und zumindest einer der Wahl-Konfigurationsparameter durch einen Benutzer änderbar ist.

14. Telekommunikationsverfahren nach Anspruch 12 oder 13, **dadurch gekennzeichnet, dass** der Produktions-Datensatz außerdem den Produktionsstatus und/oder vorhandene Fix-Konfigurationsparameter widerspiegelt.

15. Telekommunikationsverfahren nach einem der Ansprüche 12 bis 14, **dadurch gekennzeichnet, dass** der Produktions-Datensatz außerdem den PNR-Zeitpunkt für einen vorhandenen Wahl-Konfigurationsparameter widerspiegelt.

16. Telekommunikationsverfahren nach einem der Ansprüche 12 bis 15, **dadurch gekennzeichnet, dass** der Produktions-Datensatz außerdem Informationen über Wahlmöglichkeiten für einen vorhandenen Wahl-Konfigurationsparameter widerspiegelt.

17. Telekommunikationsverfahren nach einem der Ansprüche 12 bis 16, **dadurch gekennzeichnet, dass** wenigstens ein Wahl-Konfigurationsparameter ein Individual-Konfigurationsparameter ist, über welchen der Benutzer den Gegenstand individualisieren kann.

18. Computerprogramm, welches derart konfiguriert ist, dass es bei seinem Ausführen auf einem Computer (32; 42) den Computer (32; 42) zur Durchführung folgender Schritte steuert:
a) Laden eines Produktions-Datensatzes von einem Kommunikationspartner (42; 40), wobei der Produktions-Datensatz zumindest einen vorhandenen Wahl-Konfigurationsparameter widerspiegelt, bei dem es sich um einen Konfigurationsparameter handelt, der bei der Herstellung eines Gegenstandes (26), insbesondere eines Kraftfahrzeugs (28), in einem Konfigurations-Arbeitsablauf am Gegenstand (26) umgesetzt wird und bis zum Erreichen eines dem zumindest einen Konfigurationsparameter zugeordneten PNR-Zeitpunktes geändert werden kann;
b) Wiedergeben von für einen Benutzer verwertbaren Informationen auf der Basis des Produktions-Datensatzes;
c) Ermöglichen, dass ein Benutzer einen oder mehrere Wahl-Konfigurationsparameter ändert;
c) Erzeugen eines Änderungs-Datensatzes, welcher Änderungen eines oder mehrerer Wahl-Konfigurationsparameter widerspiegelt;
d) Übermitteln des Änderungs-Datensatzes an den Kommunikationspartner (42; 40).

19. Computerprogramm nach Anspruch 18, **dadurch gekennzeichnet, dass** es abhängig von dem Produktions-Datensatz eine oder mehrere der folgenden Angaben als verwertbare Informationen wiedergibt:
a) einen, mehrere oder alle vorhandenen Wahl-Konfigurationsparameter;
b) den Produktionsstatus des Gegenstandes (26);
c) einen, mehrere oder alle vorhandene Fix-Konfigurationsparameter;
d) einen, mehrere oder alle PNR-Zeitpunkte für vorhandene Wahl-Konfigurationsparameter;
e) gegebene Wahlmöglichkeiten für einen, mehrere oder alle vorhandenen Wahl-Konfigurationsparameter.

20. Computerprogramm nach Anspruch 18 oder 19, **dadurch gekennzeichnet, dass** der Computer (32) eine mobilen Kommunikationseinrichtung (32), insbesondere ein Smartphone (36) oder ein Tablet-Computer (38) ist.

21. Elektronisches Datenverarbeitungssystem mit wenigstens einem Computer (32; 42), auf welchen ein Computerprogramm nach einem der Ansprüche 18 bis 20 installiert ist.

22. Datenträger, auf welchem ein Computerprogramm nach einem der Ansprüche 18 bis 20 abgelegt ist.
